# EUROPEAN PATENT APPLICATION

(11) **EP 3 196 653 A1**
(43) Date of publication of application: **26.07.2017**
(21) Application number: 16152355.0
(22) Date of filing: 22.01.2016
(51) Int. Cl.: G01N 35/04, B65G 47/80, B65G 47/84

(54) **SAMPLE HANDLING DEVICE**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

The invention relates to a sample handling device for a laboratory automation system comprising a first carousel (2) with a disc (20) supported rotatably about a first axis (20), a second carousel (3) with a disc (30) supported rotatably about a second axis (30) parallel to the first axis (20), and at least one transfer element (4, 104, 204) arranged between the first carousel (2) and the second carousel (3), wherein each disc (21, 31) has a plurality of recesses (22, 32) distributed radially about a perimeter of the disc (21, 31), wherein each recess (22, 32) is arranged for receiving a sample tube carrier (5), and wherein the at least one transfer element (4, 104, 204) is supported swivelably and/or rotatably about a third axis (40) parallel to the first axis (20) for transferring a sample tube carrier (5) from the first carousel (2) to the second carousel (3) by rotating the at least one transfer element (4, 104, 204). The invention further relates to a laboratory automation system comprising a sample handling device (1).

## Description

### TECHNICAL FIELD AND PRIOR ART

The invention relates to a sample handling device for use in a laboratory automation system. The invention further relates to a laboratory automation system comprising a sample handling device.

A laboratory automation system comprises a number of pre-analytical, analytical and/or post-analytical stations, in which samples, for example blood, saliva, swab, urine and other specimens taken from the human body, are processed. It is generally known to provide sample tubes containing the samples. The sample tubes are also referred to as test tubes. For processing of the sample, the sample tubes are distributed to designated stations or operating positions of the laboratory automation system.

Several sample tubes can be placed in so-called racks for a handling. In an alternative distribution system, sample tubes are placed in an upright or vertical position in so called pucks having a retaining area for retaining one single sample tube.

A sample handling device comprising one or more carousels is shown for example in US 7,670,553, wherein a plurality of sample tubes is retained in a linear rack. The carousels are provided with radially distributed slots, each of which can accommodate a linear rack containing a plurality of sample tubes. Once in the carousel, the samples on the linear rack can be processed, for example, by movement to a pipetting station or diluting station arranged at the periphery of the carousels.

### SUMMARY OF THE INVENTION

It is the object of the invention to provide a sample handling device allowing for a precise positioning of sample tubes, which is simple in construction and robust in operation. It is further the object of the invention to provide a laboratory automation system comprising such a sample handling device.

This object is solved by the sample handling device with the features of claim 1 and the laboratory automation system with the features of claim 15. Preferred embodiments are defined in the dependent claims.

According to a first aspect, a sample handling device for a laboratory automation system comprising a first carousel with a disc supported rotatably about a first axis, a second carousel with a disc supported rotatably about a second axis parallel to the first axis, and at least one transfer element arranged between the first carousel and the second carousel is provided, wherein each disc has a plurality of recesses distributed radially about a perimeter of the disc, wherein each recess is arranged for receiving a sample tube carrier, and wherein the at least one transfer element is supported swivelably and/or rotatably about a third axis parallel to the first axis for transferring a sample tube carrier from the first carousel to the second carousel by rotating the at least one transfer element.

The sample tube carriers are designed to retain one single sample tube or a plurality of sample tubes. The sample handling device allows handling of loaded carriers and/or empty carriers. The carousels allow for a precise positioning of the carriers at operating positions or stations arranged at the periphery of the carousels. As will be apparent to the person skilled in the art, further carousels with additional transfer elements between adjacent carousels can be added to the device. The number of carousels, the number of recesses at the carousels and the size of the carousels can be adapted to the number of process cycles required. Providing two or more carousels instead of one single carousel allows for an optimized use of space available and/or for a distribution of carriers to different subsequent stations or supply lines. When providing a rotatable or swivelable transfer element, a continuous transfer or a transfer timed to the cycle of the carousels is possible. The sample tube carriers in particular are moved along a curved path, in particular along a circular-arc path by rotating the at least one transfer element.

In one embodiment, the at least one transfer element is a track switch comprising at least one radially extending finger or a disc with a separation wall, wherein the transfer element is arranged for being swiveled and/or rotated to selectively transfer a carrier from the first carousel to the second carousel. With such an embodiment, if required, for example in case of a malfunction or failure in a work process carried out while the sample tube carrier is conveyed by means of the first carousel, said sample tube carrier can be transferred to the second carousel, whereas the other sample tube carriers remain on the first carousel. In alternative, defective sample tube carriers remain on the first carousel and all other sample tube carriers are transferred to the second carousel. For the transfer of one sample tube carrier, in one embodiment, the track switch is arranged swivelable and swiveled back-and-forth about the third axis for selectively transferring single sample tube carriers. In other embodiments, the track switch is arranged rotatable and rotated stepwise or continuously with the same direction of rotation for selectively transferring sample tube carriers to the second carousel.

In alternative embodiments, the at least one transfer element is a rotating star wheel conveyor comprising a plurality of radially extending fingers and recesses formed between the fingers, wherein each recess is arranged for receiving a sample tube carrier.

In the context of the application, a rotating star wheel conveyor is defined as a substantially disk shaped conveyor provided at the periphery with a plurality of pockets or recesses arranged equally spaced around a central axis, wherein for transferring a sample tube carrier the disk is rotated. The rotating star wheel conveyor is arranged rotatable and rotated stepwise or continuously with the same direction of rotation for transferring sample tube carriers to the second carousel. Due to centrifugal forces resulting from the rotation, the carriers are forced in radial direction away from the central axis, wherein the centrifugal forces are used for transferring the sample tube carriers between the carousels and the star wheel conveyor. In order to retain the carriers in the recesses of the carousels and the star wheel conveyors in regions other than the transfer regions, guide rails encircling at least part of the star wheel's and the carousels periphery, respectively, are provided, wherein the carriers are retained within a respective recess while being supported between contact surfaces of the recesses itself and the respective guide rail.

The dimension and position of the at least one rotating star wheel conveyor is adapted to the dimension of the carousels and the distance between the carousels, so that at the transfer area, a circumferential speed of the rotating star wheel conveyor matches the speed of the carousels. In particular, the product of the diameter of the circular movement path of the carriers conveyed by the first carousel and the angular speed of the first carousel equals the product of the diameter of the circular movement path of the carriers conveyed by the rotating star wheel conveyor and the angular speed of the rotating star wheel conveyor.

In one embodiment, a diameter of the circular movement path of the carriers conveyed by the at least one rotating star wheel conveyor is half the diameter of the circular movement path of the carriers conveyed by the first carousel and the second carousel, wherein in particular a number of recesses of each of the first and the second carousel is equal to or twice the number of recesses of the at least one rotating star wheel conveyor. In order to ensure that at the transfer area the circumferential speed of the rotating star wheel conveyor matches the speed of the carousels the rotating star wheel conveyor in this embodiment is rotated with twice the rotational speed of the carousels. In case the number of recesses of the rotating star wheel conveyor equals the number of recesses provided at the carousels, only every second recess of the rotating star wheel conveyor is used to transfer a carrier from the first carousel to the second carousel. In case the number of recesses of the rotating star wheel conveyor is half the number of recesses provided at the carousels, every recess of the rotating star wheel conveyor is used for transferring a carrier from the first carousel to the second carousel.

The number of recesses at the carousels and at the transfer element is chosen by the person skilled in the art considering restrictions of the particular field of use. In one embodiment, the at least one rotating star wheel conveyor comprises five radially extending fingers and five recesses arranged between the fingers.

In one embodiment, the first and the second carousel a driven to rotate in opposite directions, wherein an even number of transfer elements is provided between the first and the second carousel.

In preferred embodiments, in order to minimize the elements of the sample handling device, the first and the second carousel are driven to rotate in the same direction, wherein one rotating star wheel conveyor driven to rotate in the opposite direction is provided between the first and the second carousel.

In one embodiment, a plurality of synchronized drive systems is provided for driving the first carousel, the second carousel and transfer element, in particular the rotating star wheel conveyor. In other embodiments, the first carousel, the second carousel and transfer element, in particular the rotating star wheel conveyor are driven by a common drive system. The common drive system in one embodiment comprises a hydraulic device. In other embodiments, an electric motor is provided for driving the first carousel, the second carousel and the rotating star wheel conveyor.

In one embodiment, the common drive system comprises at least one drive belt.

In one embodiment, the first carousel, the second carousel and the at least one transfer element, in particular the at least one rotating star wheel conveyor are arranged to be driven in a stop-and-go mode for transferring the sample tube carriers between operating positions or stations assigned to the first carousel and/or the second carousel. The number of recesses and, hence, the angular displacement at each step can be adapted to the number of operating positions required. For example, in one embodiment, each carousel is driven to rotate by 72°, i.e. 360°/5, in each step. In case the transfer element is a rotating star wheel conveyor, which is operated to rotate with twice the speed, the rotating star wheel conveyor is driven to rotate by 144° in each step.

The dimension and position of the at least one transfer element is adapted to the dimension of the carousels and the distance between the carousels.

In preferred embodiments, a distance between the first axis and the third axis is less than the sum of the radius of an envelope curve of the at least one transfer element and the radius of an envelope curve of the first carousel and/or a distance between the second axis and the third axis is less than the sum of the radius of the envelope curve of the at least one transfer element and the radius of an envelope curve of the second carousel, wherein the at least one finger of the at least one transfer element is offset in the direction of the third axis from the disc of the first carousel and the disc of the second carousel, respectively. In the context of the application, the envelope curve is defined as the enclosing circle of the at least one finger of the transfer element and the discs of the carousels, respectively. In other words, the carousels and the transfer elements are arranged and dimensioned such that the envelope curves intersect in a plane perpendicular to the axes and the at least one transfer elements meshes with the discs of the carousels for transferring carriers between the carousels, wherein for avoiding collisions the discs and the at least one finger of the transfer element are offset.

In order to ensure an error-free operation and/or to allow for immediate action in case of an error, in one embodiment a control device comprising at least one contactless monitoring sensor, in particular at least one optical monitoring sensor is provided.

The sample handling device in particular is suitable to use with carriers having a body with circular periphery allowing for a smooth guidance along the guide paths. In one embodiment, carriers having a body with a circular periphery and retaining several sample tubes are provided. In preferred embodiments, the recesses of the at least one transfer element and of the first and the second carousel are arranged for receiving a sample tube carrier retaining a single sample tube. Such carriers are also referred to as pucks.

In order to link the device to other elements of a laboratory automation system, in one embodiment, at least one entry region for feeding sample tube carriers to the first carousel, and at least one exit region for taking over sample tube carriers from the second carousel are provided, wherein in particular two entry regions for feeding sample tube carriers to the first carousel and the second carousel, respectively, and at least two exit regions for taking over sample tube carriers from the first carousel and second carousel, respectively, are provided.

In one embodiment, the sample handling device is linked at the at least one entry region and/or at the at least one exit region to a sample distribution system comprising linear inlet conveyor devices, in particular a belt conveyor devices. In alternative to the belt conveyor devices, in one embodiment screw conveyor devices are provided for feeding the sample tube carries to the first carousel and/or for taking over sample tube carriers from the second carousel. A distance of the first carousel and the second carousel in one embodiment is adapted to the distance between the linear inlet conveyor and the linear outlet conveyor defined by conveyor lines of an already established laboratory automation system.

In one embodiment, at least two linear inlet conveyor devices, in particular two belt conveyor devices, for feeding sample tube carriers to the first carousel and the second carousel, respectively, and at least two linear outlet conveyor devices, in particular two belt conveyor devices, for taking over sample tube carriers from the first carousel and second carousel, respectively, are provided. In this case, the device can also be used to distribute sample tube carriers to alternative lines of a laboratory automation system.

In still another alternative embodiment, the sample handling device is arranged adjacent to a distribution system comprising a transport plane, in particular a magnetizable transport plane, wherein a number of electro-magnetic actuators are stationary arranged below the transport plane, and wherein the electro-magnetic actuators are adapted to move a sample tube carrier on top of said transport plane by applying a magnetic force to said sample tube carrier. Such a system is described for example in WO 2013/064665 A1.

According to a second aspect, a laboratory automation system with a number of pre-analytical, analytical and/or post-analytical stations, and with a sample handling device as described above is provided.

### BRIEF DESCRIPTION OF THE DRAWINGS

In the following, embodiments of the invention will be described in detail with reference to the drawings. Throughout the drawings, the same or similar elements will be denoted by the same reference numerals.

The figures schematically show:
- Fig. 1: a top view of a first embodiment of a sample handling device;
- Fig. 2: a side view of the sample handling device of Fig. 1;
- Fig. 3: a bottom view of the sample handling device of Fig. 1;
- Fig. 4: a top view of a second embodiment of a sample handling device;
- Fig. 5: a top view of a third embodiment of a sample handling device;
- Fig. 6: a top view of a forth embodiment of a sample handling device in a first operation mode;
- Fig. 7: a top view of the sample handling device of Fig. 6 in a second operation mode;
- Fig. 8: a top view of a fifth embodiment of a sample handling device in a first operation mode;
- Fig. 9: a top view of the sample handling device of Fig. 8 in a second operation mode; and
- Fig. 10: a top view of a sixth embodiment of a sample handling device similar to Fig. 8 and 9 in a second operation mode.

### DETAILED DESCRIPTION OF EMBODIMENTS OF THE INVENTION

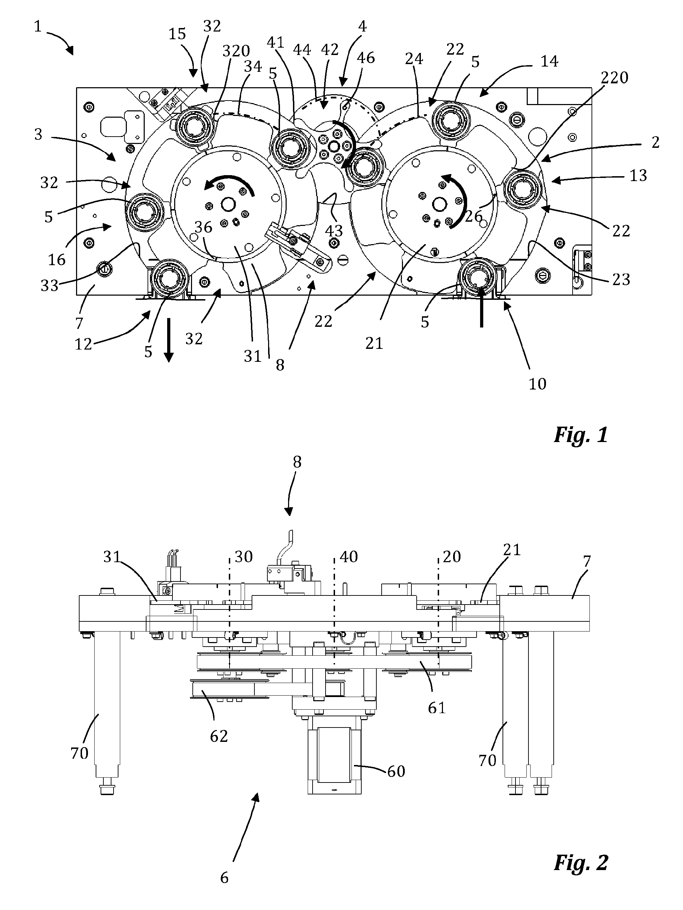

Figs. 1 to 3 show a top view, a side view and a bottom view of a first embodiment of a sample handling device 1 comprising a first carousel 2 with a disc 21 supported rotatably about a first axis 20, a second carousel 3 with a disc 31 supported rotatably about a second axis 30 parallel to the first axis 20, and one transfer element 4 arranged between the first carousel 2 and the second carousel 3 for transferring sample tube carriers 5 from the first carousel 2 to the second carousel 3, wherein the transfer element shown in Figs. 1 to 3 is a rotating star wheel conveyor 4, which is rotatable about a third axis 40 parallel to the first axis 20.

Each disc 21, 31 has a plurality of recesses 22, 32, namely five recesses 22, 32 in the embodiment shown, which recesses 22, 32 are distributed radially about a perimeter of the discs 21, 31. Each recess 22, 32 is arranged for receiving a sample tube carrier 5, wherein eight sample tube carriers 5 are schematically shown in Fig. 1. The discs 21, 31 of the carousels 2, 3 are rotated for moving the sample tube carriers 5. In order to retain the carriers 5 in the recesses 22, 32, guide rails 23, 33 encircling at least part of the discs 21, 31 periphery are provided, wherein the carriers 5 are retained within a respective recess 22, 32 while being supported between contact surfaces 220, 320 of the recesses 22, 32 itself and the respective guide rail 23, 33.

Similar, the rotating star wheel conveyor 4 comprises a plurality of recesses 42, namely five recesses 42, which are distributed radially about a perimeter of the star wheel conveyor 4. Five fingers 41 are formed between the recesses 42. Each recess 42 is arranged for receiving a sample tube carrier 5 and for transferring upon rotation of the star wheel conveyor 4 a sample tube carrier 5 along a curved, in particular along a circular-arc path from the first carousel 2 to the second carousel 3. In order to retain the carriers 5 in the recesses 42 upon the movement along the curved path, a guide rail 43 encircling at least part of the star wheel conveyor's 4 periphery is provided, wherein the carriers 5 are retained within a respective recess 42 while being supported between two adjacent fingers 41 and the guide rail 43.

Circles enclosing the rotated discs 21, 31 of the carousels 2, 3 and the fingers 41 of the star wheel conveyor 4 are referred to as envelope curves 24, 34, 44, schematically shown as dash-dot lines in Fig. 1. As can be seen in Fig. 1, in the embodiment shown, a distance between the first axis 20 and the third axis 40 is less than the sum of the radius of the envelope curve 44 of the star wheel conveyor 4 and the radius of the envelope curve 24 of the first carousel 2. Likewise, as the carousels 2, 3 are arranged in mirror symmetry and at least the discs of the carousels 2, 3 are identical in construction, a distance between the second axis 30 and the third axis 40 is less than the sum of the radius of the envelope curve 44 of the star wheel conveyor 4 and the radius of the envelope curve 34 of the second carousel 3. In consequence, the fingers 41 of the star wheel conveyor 4 overlap the discs 21, 31 of the carousels 2, 3 in a plane perpendicular to the axes 20, 30, 40. However, in order to avoid a collision, the discs 21, 31 of the carousels 2, 3 are offset in the direction of the axes 20, 30, 40 from the fingers 41 of the star wheel conveyor 4. In the embodiment shown, the fingers 41 are arranged in a plane above the discs 21, 31.

As mentioned, at least the discs of the carousels 2, 3 are identical in construction. Further, in the embodiment shown in Figs. 1 to 3, a diameter of the circular movement path of the carriers 5 conveyed by the at least one rotating star wheel conveyor 4 is half the diameter of the circular movement path of the carriers 5 conveyed by the first carousel 2 and the second carousel 3. A number of recesses 22, 32 of each of the first carousel 2 and the second carousel 3 is equal to the number of recesses 42 of the at least one rotating star wheel conveyor 4. At a transfer region between the first carousel 2 and the star wheel conveyor 4 as well as at a transfer region between the second carousel 3 and the star wheel conveyor 4, a circumferential speed matches. For this purpose, the rotating star wheel conveyor 4 is driven to rotate with twice the angular speed of the discs 21,31.

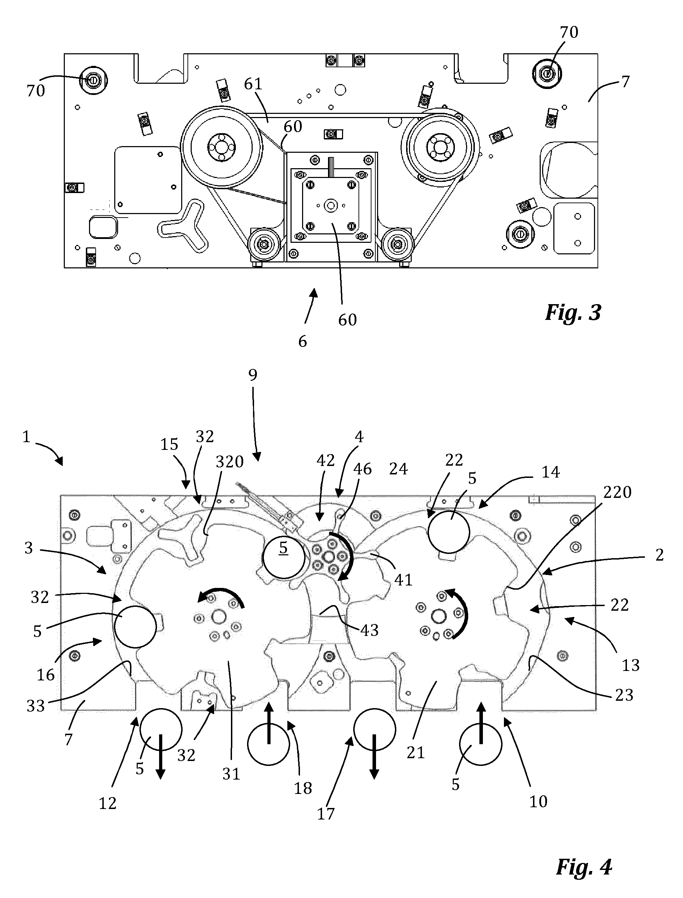

As best seen in Figs. 2 and 3, in the embodiment shown the first carousel 2, the second carousel 3 and the rotating star wheel conveyor 4 are driven by a common drive system 6 comprising a motor 60 and drive belts 61, 62.

In the embodiment shown, the carousels 2, 3 are rotated in a counter-clockwise direction as indicated by arrows in Fig. 1 and sample tube carriers 5 are fed to the first carousel 2 at an entry region 10 and leave the second carousel 3 at an exit region 12. At several operating positions 13, 14, 15 16 at the periphery of the carousels 2, 3, stations (not shown) for processing the samples for example pipetting stations or diluting stations can be provided. When rotating the carousels 2, 3, sample tube carriers 5 are moved between the operating positions. In preferred embodiments, the carousels 2, 3 are operated in a stop-and-go mode for moving a sample tube carrier 5 to one operating position 13, 14, 15, 16, stopping the movement and carrying out the processing at said operating position while holding the carrier 5 in said operating position and, thereafter moving said carrier 5 to the next operating position and/or transferring the carrier to the subsequent carousel 3. Due to the dimensioning and the number of recesses 22, 32, in the embodiment shown, each disc 21, 31 is moved by 320°/5 = 72° in each step, whereas the rotating star wheel conveyor 4 is moved twice the angular distance, i.e. by 144° in each step.

The carousels 2, 3 and the rotating star wheel conveyor 4 are arranged on a platform 7, wherein the drive system 6 is arranged underneath the platform 7. Columns 70 are provided for supporting the platform 7.

For an automated operation, a control device comprising a contactless monitoring sensor, in particular an optical sensor is provided. In the embodiment shown, an optical sensor 8 is arranged to detect grooves 36 provided at the disc 31 of the second carousel 3 for an identification of a position of said discs 31. As the carousels 2, 3 and the star wheel conveyor 4 are coupled by means of the belt, the detection of the position of one of the elements is sufficient for a monitoring. Nevertheless, in other embodiments, a second the optical sensor 8 is provided that is arranged to detect grooves 26 provided at the disc 21 of the first carousel 2 for an identification of a position of said discs 21. In alternative or in addition, at least one finger 41 of the star wheel conveyor 4 is provided with a marker 46 to be detected by means of a suitably arranged contactless detector.

Fig. 4 shows a top view of a second embodiment of a sample handling device 1 similar to Fig. 1. In contrast to the embodiment shown in Fig. 1, the platform 7 of the second embodiment is provided with four entry and/or exit regions 10, 12, 17, 18, allowing four conveyor devices to be connected to the sample handling device 1 for feeding sample tube carriers to one of the two carousels 2, 3 and taking over carriers from the carousels. For example, linear inlet conveyor devices are attached to the first carousel 2 at the entry region 10 and the second carousel at the entry region 18, respectively and linear outlet conveyor devices for taking over sample tube carriers 5 from the first carousel 2 and the second carousel 3 are provided at the exit regions 17 and 12, respectively.

In Fig. 4, in contrast to the embodiment shown in Figs. 1 to 3, a contactless sensor 9 is provided, which is arranged to detect the marker 46 provided on one finger 41 of the star wheel conveyor 4.

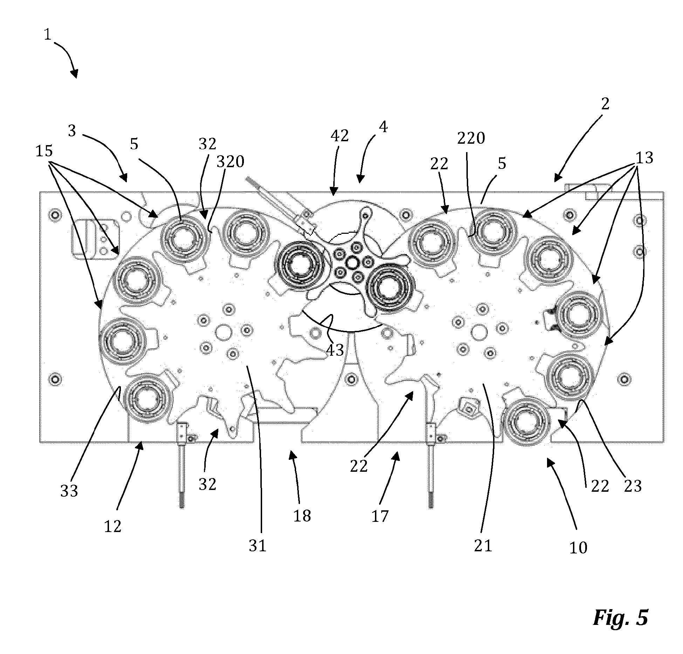

Fig. 5 shows a top view of third embodiment of a sample handling device 1 similar to Fig. 4. In contrast to the embodiment shown in Fig. 4, discs 21, 31 are each provided with 10 recesses 22, 32, allowing to provide more operating positions 13, 15 at each carousel 2, 3. In other words, the number of recesses 22, 32 of each of the first carousel 2 and the second carousel 3 is twice the number of recesses 42 of the rotating star wheel conveyor 4 arranged between the carousels 2, 3. The sample handling device 1 is again operated in a stop-and-go mode, wherein the discs 21, 31 are rotated about 36° degrees in each step.

As shown in Fig. 5, sample tube carriers 5 are transferred to and from the sample handling device 1 at two out of four possible entry and/or exit regions 11, 12, 17, 18. However, the device could be converted into a system, in which alternative entry and/or exit regions 11, 12, 17, 18 are used.

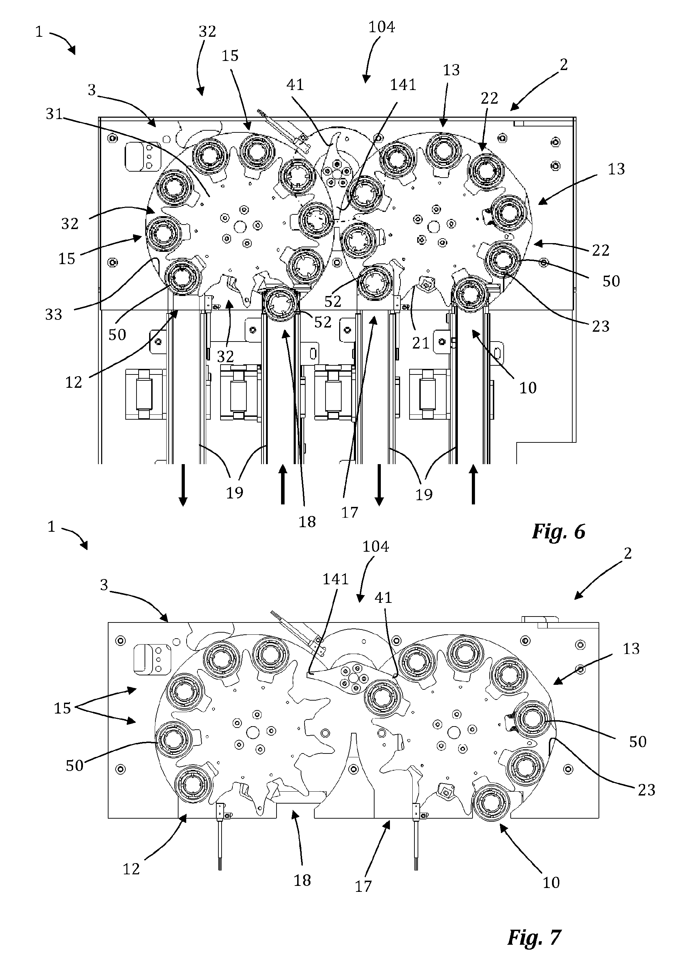

Figs. 6 and 7 show a top view of fourth embodiment of a sample handling device 1 comprising a first carousel 2 with a disc 21 and a second carousel 3 with a disc 31, wherein four belt conveyors 19 are provided. More particular, two belt conveyor devices 19 are provided at the entry regions 10 and 18 for feeding sample tube carriers 5 to the first carousel 2 and the second carousel 3, respectively, and two belt conveyor devices 19 are provided at the exit regions 17 and 12 for taking over sample tube carriers 5 from the first carousel 2 and second carousel 3, respectively.

Each disc 21, 31 has a plurality of recesses 22, 32, namely ten recesses 22, 32 in the embodiment shown in Figs. 6 and 7. Each recess 22, 32 is arranged for receiving a sample tube carrier 50, 52.

The two carousels 2, 3 can be operated to a large degree independently. In the embodiment shown, sample tube carriers 50 retaining test tubes are fed to the first carousel 2, test tubes are removed from the carriers 50 at one of the operating positions 13 and empty sample tube carriers 52 are transferred to the belt conveyor 19 provided at the exit region 17 of the first carousel 2. On the other hand, empty sample tube carriers 50 retaining test tubes are fed to the second carousel 3, test tubes are inserted into the empty sample tube carriers 52 at one of the operating positions 15 and sample tube carriers 50 retaining sample tubes are transferred to the belt conveyor 19 provided at the exit region 12 of the second carousel 3.

In contrast to the embodiments shown in the previous figures, the transfer element is a track switch 104 comprising two radially extending fingers 41, 141. The transfer element is arranged for being rotated to selectively transfer a sample tube carrier 50 from the first carousel 2 and, hence, a first line, to the second carousel 3, and, hence, a second line. The first finger 41 serves to move a carrier 50 along a curved, in particular circular-arc path from the first carousel 2 to the second carousel 3. In addition, a second finger 141 is provided. In the angular orientation shown in Fig. 6, a second finger 141 is arranged in order to extend a guide rail 23 of the first carousel 2, wherein in a rest position shown in Fig. 6, sample tube carriers 52transported in the first carousel 2 are guided along the second finger 141 and conveyed towards the belt conveyor device 19 arranged at the exit region 17 of the first carousel 2. When rotating the track switch 104 in a clock-wise direction over at least about 45°, the second finger 141 is moved out of the region extending the guide rail 23. The first finger 41 engages with the sample tube carrier 50 as shown in Fig. 7 and transfers the sample tube carrier 50 towards the second carousel 3. In preferred embodiments, the track switch 104 is driven to perform one full revolution in order to transfer one carrier 5 from the first carousel 2 to the second carousel 3. The first carousel 2 is stopped for avoiding any collision with sample tube carriers 50 in the first carousel 2 and the track switch 104 upon rotation of the track switch. In one embodiment, the track switch 104 is driven with varying speed, in order to move the first finger 41 at the transfer regions with the same circumferential speed as the discs 21, 31 of the carousels 2, 3, but to move the track switch 104 at a higher speed before engaging with the carrier 50 and after releasing the carrier 50.

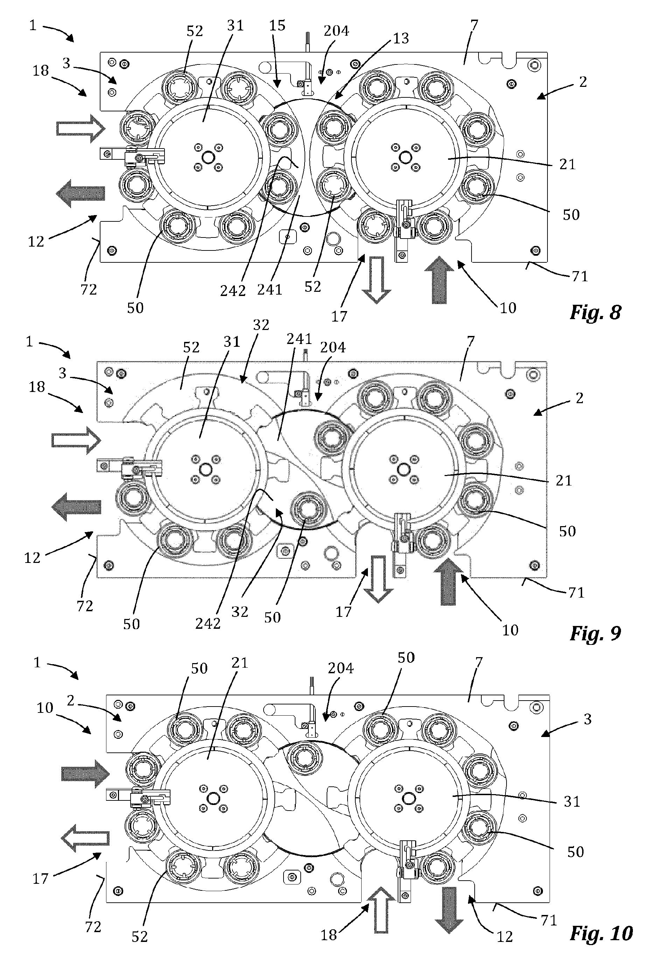

Figs. 8 and 9 show a top view of fifth embodiment of a sample handling device 1 similar to the device shown in Figs. 6 and 7 comprising a first carousel 2 with a disc 21 and a second carousel 3 with a disc 31, wherein each carousel 2, 3 has an entry region 10 and 18 for feeding sample tube carriers 50, 52 to the carousels 2, 3 and an exit regions 17 and 12 for taking over sample tube carriers 50, 52 from the carousels 2, 3.

In the embodiment shown in Figs. 8 and 9, the entry region 10 and the exit region 17 of the first carousel 2 are arranged at a first side face 71 of the platform 7, and the entry region 18 and the exit region 12 of the second carousel 3 are arranged at a second side face 72, wherein the second side face 72 adjacent to the first side face 71. The platform has a rectangular surface area and the first and the second side faces 71, 72 enclose an angle of 90°.

In the operation mode shown in Fig. 8, sample tube carriers 50 retaining test tubes are fed to the first carousel 2, test tubes are removed from the carriers 50 at one of the operating positions 13 and empty sample tube carriers 52 are transferred to a belt conveyor or any other distribution system provided at the exit region 17 of the first carousel 2. Likewise, empty sample tube carriers 50 retaining test tubes are fed to the second carousel 3, test tubes are inserted into the empty sample tube carriers 52 at one of the operating positions 15, and sample tube carriers 50 retaining sample tubes are transferred to a distribution system provided at the exit region 12 of the second carousel 3. In contrast to previous embodiments, both carousels 2, 3 are driven to rotate the same direction of rotation.

A track switch 204 functioning as a transfer element comprising a disc 242 and a separation wall 241 is provided between the two carousels 2, 3.

If required, the track switch 204 is driven to transfer sample tube carriers 50, 52 from the first carousel 2 to the second carousel 3 or vice versa.

Fig. 9 shows an operation, wherein sample tube carriers 50 are transferred from the first carousel 2 to the second carousel 3. For this purpose, the first carousel 2 is stopped and second carousel 3 is completely unloaded or at least unloaded to have to a series of consecutive empty recesses 32 arranged at a transfer area.

Next, the second carousel 3 is stopped and the transfer element 204 is driven to rotate at least by 180°, wherein at first the transfer element 204 is driven to rotate together with the first carousel 2 and after forwarding the first carousel 2 one step ahead, the transfer element 204 is driven to rotate by itself to move a sample tube carrier 50 from the first carousel 2 to the second carousel 3.

Fig. 10 shows a top view of sixth embodiment of a sample handling device 1 similar to the device shown in Figs. 8 and 9 comprising a first carousel 2 with a disc 21 and a second carousel 3 with a disc 31, wherein each carousel 2, 3 has an entry region 10 and 18 for feeding sample tube carriers 50, 52 to the carousels 2, 3 and an exit regions 17 and 12 for taking over sample tube carriers 50, 52 from the carousels 2, 3. In contrast to the embodiment shown in Figs. 8 and 9, the first carousel 2 is arranged to have the entry and the exit region 10, 17 at the second side face 72.

The sample handling device 1 in accordance with the invention can be used in various different laboratory automation systems, whereon depending on the requirements of the system, different stations are provided at the operating positions 13, 14, 15 16 at the periphery of the carousels 2, 3. Conceivable stations include, but are not limited to pipetting stations, diluting stations, hand-over stations for loading or unloading the sample tube carriers, bar code reading stations, capping or de-capping stations. Next, the two carousels 2, 3 may resume the independent operation, or, if required, the second carousel 3 is driven to move one step ahead and the process of transferring one sample tube carrier 50 from the first carousel 2 to the second carousel 3 is repeated.

Preferably, in all embodiments shown, the carriers 5 are arranged to retain one single sample tube allowing for an individual distribution of the sample tubes to designated stations or modules of a laboratory automation system.

In the embodiments shown, rails or belt conveyors 19 are provided for feeding the sample tube carriers 5 at the entry region 10, 18 to the first carousel 2 or the second carousel 3 and for receiving sample tube carriers 5 at the exit region 12, 17 from the second carousel 3. In an alternative embodiment, the device 1 is arranged adjacent to a distribution system comprising a transport plane, wherein a number of electro-magnetic actuators are stationary arranged below the transport plane, and wherein the electro-magnetic actuators are adapted to move a sample tube carrier on top of said transport plane by applying a magnetic force to said sample tube carrier. Such a system is described for example in WO 2013/064665 A1.

## Claims

1. A sample handling device for a laboratory automation system comprising a first carousel (2) with a disc (21) supported rotatably about a first axis (20), a second carousel (3) with a disc (31) supported rotatably about a second axis (30) parallel to the first axis (20), and at least one transfer element (4, 104, 204) arranged between the first carousel (2) and the second carousel (3), wherein each disc (21, 31) has a plurality of recesses (22, 32) distributed radially about a perimeter of the disc (21, 31), and wherein each recess (22, 32) is arranged for receiving a sample tube carrier (5, 50, 52), **characterized in that** the at least one transfer element (4, 104, 204) is supported swivelably and/or rotatably about a third axis (40) parallel to the first axis (20) for transferring a sample tube carrier (5, 50, 52) from the first carousel (2) to the second carousel (3) by rotating the at least one transfer element (4, 104, 204).

2. The sample handling device according to claim 1, **characterized in that** the at least one transfer element (104, 204) is a track switch comprising at least one radially extending finger (141) or a disc (242) with a separation wall (241), wherein the transfer element (104, 204) is arranged for being swiveled and/or rotated to selectively transfer a sample tube carrier (5, 50, 52) from the first carousel (2) to the second carousel (3).

3. The sample handling device according to claim 1, **characterized in that** the at least one transfer element is a rotating star wheel conveyor (4) comprising a plurality of radially extending fingers (41) and recesses (42) formed between the fingers (41), wherein each recess (42) is arranged for receiving a sample tube carrier (5), wherein in particular the at least one rotating star wheel conveyor (4) comprises five radially extending fingers (41) and five recesses (42) arranged between the fingers (41).

4. The sample handling device according to claim 3, **characterized in that** the first carousel (2), the second carousel (3), and the at least one rotating star wheel conveyor (4) rotate with the same circumferential speed.

5. The sample handling device according to claim 3 or 4, **characterized in that** a diameter of the circular movement path of the carriers (5) conveyed by the at least one rotating star wheel conveyor (4) is half the diameter of the circular movement path of the carriers (5) conveyed by the first carousel (2) and the second carousel (3), wherein in particular a number of recesses (22, 32) of each of the first carousel (2) and the second carousel (3) is equal to or twice the number of recesses (42) of the at least one rotating star wheel conveyor (4).

6. The sample handling device according to claim 3, 4 or 5, **characterized in that** the first carousel (2) and the second carousel (3) are driven to rotate in the same direction, wherein one rotating star wheel conveyor (4) driven to rotate in the opposite direction is provided between the first carousel (2) and the second carousel (3).

7. The sample handling device according to any one of claims 1 to 6, **characterized in that** the first carousel (2), the second carousel (3) and the transfer element (4, 104, 204) are driven by a common drive system (6).

8. The sample handling device according to claim 7, **characterized in that** the common drive system (6) comprises at least one drive belt (61, 62).

9. The sample handling device according to any one of claims 1 to 8, **characterized in that** the first carousel (2), the second carousel (3) and the at least one transfer element (4, 104, 204) are arranged to be driven in a stop-and-go mode for transferring the sample tube carriers (5) between stations assigned to the first carousel (2) and/or the second carousel (3).

10. The sample handling device according to any one of claims 2 to 9, **characterized in that** a distance between the first axis (20) and the third axis (30) is less than the sum of the radius of an envelope curve (44) of the at least one transfer element (4, 104, 204) and the radius of an envelope curve (24) of the first carousel (2) and/or a distance between the second axis (20) and the third axis (30) is less than the sum of the radius of the envelope curve (44) of the at least one transfer element (4, 104, 204) and the radius of an envelope curve (34) of the second carousel (3), wherein the at least one finger (41) of the at least one transfer element (4, 104, 204) is offset in the direction of the third axis (40) from the disc (21) of the first carousel (2) and the disc (31) of the second carousel (3), respectively.

11. The sample handling device according to any one of claims 1 to 10, **characterized in that** a control device comprising at least one contactless monitoring sensor, in particular at least one optical sensor (80) is provided.

12. The sample handling device according to any one of claims 1 to 11, **characterized in that** the recesses (42) of the at least one transfer element (4) and of the first and the second carousel (2, 3) are arranged for receiving a sample tube carrier (5) retaining a single sample tube.

13. The sample handling device according to any one of claims 1 to 12, **characterized in that** at least one entry region (10) for feeding sample tube carriers (5, 50) to the first carousel, and at least one exit region (12) for taking over sample tube carriers (5, 52) from the second carousel (3) are provided, wherein in particular two entry regions (10, 18) for feeding sample tube carriers (5, 50, 52) to the first carousel (2) and the second carousel (3), respectively, and at least two exit regions (12, 17) for taking over sample tube carriers (5, 52, 50) from the first carousel (2) and second carousel (3), respectively, are provided.

14. The sample handling device according to claim 13, **characterized in that** the sample handling device is linked at the at least one entry region (10, 18) and/or at the at least one exit region (12, 17) to a sample distribution system comprising linear inlet conveyor devices, in particular a belt conveyor devices (19), and/or a transport plane, in particular a magnetizable transport plane.

15. Laboratory automation system with a number of pre-analytical, analytical and/or post-analytical stations, and with a sample handling device according to any one of claims 1 to 14.
